Europäisches Patentamt

European Patent Office

Office européen des brevets

(11) Veröffentlichungsnummer : **0 375 053 B1**

(12) **EUROPÄISCHE PATENTSCHRIFT**

(19)

(45) Veröffentlichungstag der Patentschrift :
**18.10.95 Patentblatt 95/42**

(51) Int. Cl.⁶ : **G06T 3/00**

(21) Anmeldenummer : **89203221.0**

(22) Anmeldetag : **18.12.89**

(54) **Schaltungsanordnung zur geometrischen Bildtransformation.**

(30) Priorität : **22.12.88 DE 3843232**

(43) Veröffentlichungstag der Anmeldung :
**27.06.90 Patentblatt 90/26**

(45) Bekanntmachung des Hinweises auf die
Patenterteilung :
**18.10.95 Patentblatt 95/42**

(84) Benannte Vertragsstaaten :
**DE FR GB NL**

(56) Entgegenhaltungen :
**EP-A- 0 274 775**
**GB-A- 2 174 860**
**US-A- 3 745 345**
**US-A- 4 736 399**
**IBM TECHNICAL DISCLOSURE BULLETIN,**
**Band 14, Nr. 10, März 1972, Seiten 2994-2996,**
**New York, US; N. Herbst et al.: "Variable**
**core-size linear transformation program"**

(73) Patentinhaber : **Philips Patentverwaltung**
**GmbH**
**Röntgenstrasse 24**
**D-22335 Hamburg (DE)**
⑧④ **DE**
Patentinhaber : **Philips Electronics N.V.**
**Groenewoudseweg 1**
**NL-5621 BA Eindhoven (NL)**
⑧④ **FR GB NL**

(72) Erfinder : **Haaker, Paul Rudolf**
**Burgwedeltwiete 11**
**D-2000 Hamburg 61 (DE)**
Erfinder : **Klotz, Erhard Paul Artur**
**Seekamp 110**
**D-2083 Halstenbek (DE)**
Erfinder : **Koppe, Reiner Heinrich, Dr.**
**Rugenbergener Weg 3**
**D-2000 Hamburg 61 (DE)**
Erfinder : **Linde, Rolf Erich**
**Kamperrege 21**
**D-2081 Haseldorf (DE)**
Erfinder : **Hansen, Karsten Peter**
**Gertigstrasse 25**
**D-2000 Hamburg 60 (DE)**

(74) Vertreter : **Hartmann, Heinrich, Dipl.-Ing. et al**
**Philips Patentverwaltung GmbH,**
**Röntgenstrasse 24**
**D-22335 Hamburg (DE)**

**Beschreibung**

Die Erfindung betrifft eine Schaltungsanordnung nach dem Oberbegriff des Anspruchs 1. In der Bildverarbeitung stellt sich oft das Problem, ein von einem bildgebenden System erzeugtes Bild geometrisch zu transformieren. Beispielsweise ist es bei bildgebenden Systemen, die verzerrte Bilder liefern, in der Regel erforderlich, dieses verzerrte Bild in ein nicht-verzerrtes Bild zu transformieren. Solche Bildverzerrungen können sich beispielsweise bei einer Röntgenbildverstärker-Fernsehkette als Folge der Wölbung des Eingangsschirms des Röntgenbildverstärkers ergeben.

Es ist aus der DE-OS 34 19 043 bekannt, daß die Wiedergabe eines auf diese Weise verzerrten Bildes dadurch entzerrt werden kann, daß die Ablenkspannungen des Wiedergabemonitors so variiert werden, daß das wiedergegebene Bild unverzerrt erscheint.

In vielen Fällen genügt es aber nicht, eine unverzerrte Wiedergabe zu erreichen, sondern es ist erforderlich, das Bild, das der Wiedergabeeinrichtung zugeführt ist, so zu entzerren, daß für die Wiedergabe keine Entzerrung mehr erforderlich ist. So sind in der US-PS 3 499 146 sowie in der DE-OS 32 37 572 Schichtaufnahmeverfahren beschrieben bei denen mehrere Röntgenaufnahmen eines Objektes aus verschiedenen Perspektiven angefertigt werden. Die Bildwerte dieser Röntgenaufnahmen werden in einer Speicheranordnung gespeichert. Zur Erzeugung von Schichtaufnahmen werden die Bildwerte kombiniert, die in den einzelnen Aufnahmen dem gleichen Bildpunkt innerhalb einer Schicht geometrisch zugeordnet sind. Dies setzt unverzerrte Röntgenaufnahmen voraus.

In der Zeitschrift IEEE Comp. in Cardiology, Boston, Oct. 7-10 1986 (1987), S. 615-618 ist in einem Aufsatz von S. Tehrani et al. ein Bildtransformationsverfahren beschrieben, das es gestatten würde, die bekannten Verfahren auch dann durchzuführen, wenn das bildgebende System, mit dem die Röntgenaufnahmen angefertigt werden, nur verzerrte Aufnahmen liefert. Dieses Verfahren sortiert die gespeicherten Bildwerte einer Röntgenaufnahme so um, daß sie unter den gleichen Speicheradressen abgelegt werden, in denen sie gespeichert wären, wenn das bildgebende System nicht verzerren würde. Dabei wird für jeden Bildpunkt mittels eines Polynoms die Zuordnung zwischen den Koordinaten in einem verzerrten Bild und den Koordinaten in einem unverzerrten Bild berechnet und die Bildwerte entsprechend dieser Berechnung umsortiert. Da diese Berechnung für jeden Bildpunkt durchgeführt werden muß, ergeben sich für die Transformation relativ lange Rechenzeiten - auch wenn das der Rechnung zugrundeliegende Polynom nur relativ wenige Glieder enthält und die Transformation daher relativ ungenau ist.

Weiterhin ist aus der GB-A 2 174 860 ein Videosignal-Generator für Spezialeffekte bekannt, bei dem die Videosignalwerte in einem ersten Speicher gespeichert werden. Die Spezialeffekte werden dadurch erzielt, daß die Koordinaten, denen die einzelnen Videosignalwerte zugeordnet sind, mit einem ortsabhängigen Skalierungsfaktor multipliziert werden und daß die Videosignalwerte dem so berechneten neuen Koordinaten- bzw. Adresswert zugeordnet werden. Die Skalierungsfaktoren sind für die verschiedenen Effekte bereits vorberechnet und in einem Speicher gespeichert.

Aufgabe der vorliegenden Erfindung ist es, die Bildtransformation auf andere Weise durchzuführen. Diese Aufgabe wird durch die im Anspruch 1 angegebenen Maßnahmen gelöst.

Bei der Erfindung werden drei Speicher verwendet. In dem ersten Speicher wird das von dem bildgebenden System gelieferte, zu transformierende und beispielsweise verzerrte Bild gespeichert. In dem zweiten Speicher ist das transformierte (entzerrte) Bild gespeichert, d.h. die Bildwerte sind darin unter solchen Adressen gespeichert, daß beim Auslesen - mit der üblichen Adressenfolge - ein unverzerrtes Bild entsteht. In dem dritten Speicher ist die Zuordnung zwischen den Adressen des ersten und des zweiten Speichers gespeichert. Im geometrischen Bereich entspricht diese Zuordnung einer Verknüpfung der Bildpunktkoordinaten im Eingangsbild und im transformierten Bild. Der Inhalt dieses Speichers bestimmt also, aus welchen Bildwerten des Eingangsbildes (im ersten Speicher) die Bildwerte des Ausgangsbildes (im zweiten Speicher) abgeleitet werden. Da hierfür keine Berechnung mehr erforderlich ist, kann die Bildtransformation schnell durchgeführt werden. Die im Speicher 3 gespeicherte Zuordnung muß zuvor zwar einmal bestimmt werden, doch kann sie dann - ohne Neuberechnung - für alle mit dem betreffenden bildgebenden System, für das sie bestimmt worden sind, auszuführenden geometrischen Bildtransformationen benutzt werden.

Hierbei wird durch den Mikroprozessor also für jeden Bildpunkt bzw. für jeden Speicherplatz im zweiten Speicher ein Bildwert gebildet, wobei ein Bildwert aus dem ersten Speicher unter Umständen mehrfach herangezogen werden kann. Gegenüber einem System, bei dem jeder Bildwert im ersten Speicher einem Bildpunkt bzw. Speicherplatz im zweiten Speicher zugeordnet wird, hat dies den Vorteil, daß Lücken (ein Speicherplatz im zweiten Speicher bzw. ein Bildpunkt enthält keinen Bildwert) nicht entstehen können.

Die Erfindung wird nachstehend anhand der Zeichnung näher erläutert. Es zeigen

Fig. 1 eine Röntgenanlage mit einer Einrichtung zur Bildtransformation nach der Erfindung,

Fig. 2 das Eingangs- und das Ausgangsbild bei der Aufnahme eines Testgitters und

Fig. 3 die Speicherbelegung bei einer Anordnung nach Fig. 1.

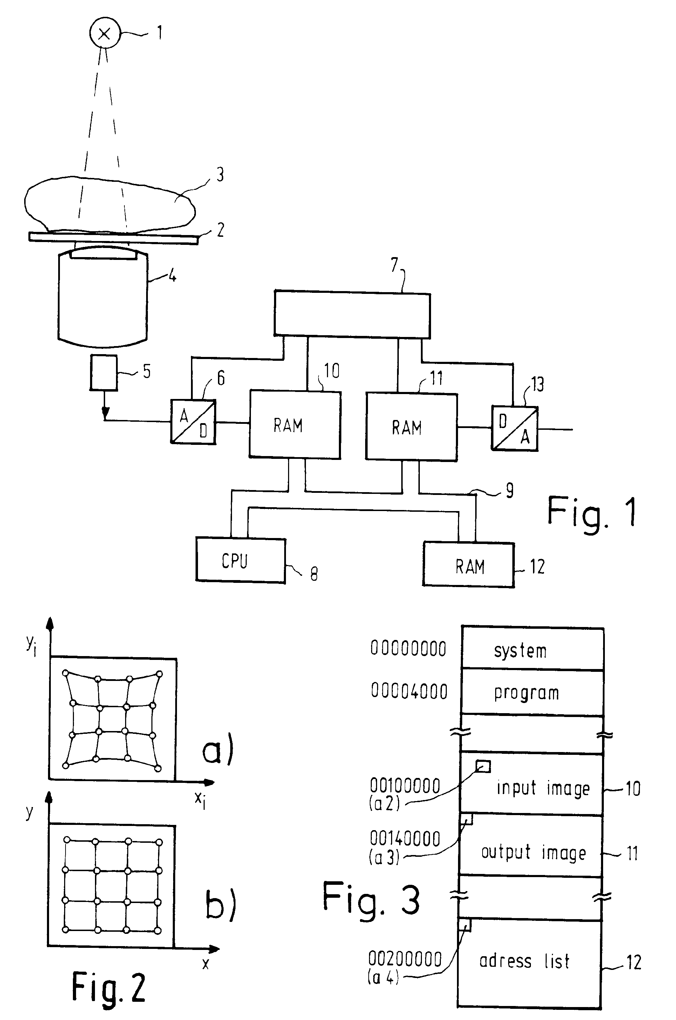

In Fig. 1 ist mit 1 ein Röntgenstrahler bezeichnet, der ein auf einer Tischplatte 2 angeordnetes Objekt 3 durchstrahlt. Das dadurch erzeugte Röntgenstrahlen-Relief wird dem Eingangsbildschirm eines Bildverstärkers 4 zugeführt, dessen in der Helligkeit verstärktes Ausgangsbild von einer Fernsehkamera 5 aufgenommen wird. Das auf diese Weise erzeugte Videosignal wird von einem Analog-Digital-Wandler 6 in eine Folge digitaler Datenworte umgesetzt, die in einem Speicher 10 unter aufeinanderfolgenden Adressen gespeichert werden. Dies wird von einer Video-Kontrolleinheit 7 gesteuert. Der Speicher 10 ist über ein Bussystem 9 an einen Mikroprozessor 8 angeschlossen, der über dieses Bussystem auch auf die Speicher 11 und 12 Zugriff hat.

Der Speicher 11 dient zur Aufnahme des transformierten (in diesem Fall des von Verzerrungen befreiten) Bildes, und der Speicher 12 enthält die Zuordnung zwischen den Speichern 10 und 11. Er enthält zu diesem Zweck mindestens soviel Speicherplätze wie der Speicher 11 zur Aufnahme des transformierten Bildes aufweist; jedoch muß die Wortbreite ausreichend sein, um jeweils eine Adresse im Speicher 10 aufnehmen zu können. Enthalten beispielsweise die beiden Speicher 10 und 11 512 x 512 Speicherplätze (=256 k), dann muß der Speicher 12 ebensoviele Speicherplätze enthalten, jedoch mit einer Wortbreite von mindestens 20 Bit. Benutzt man stattdessen 32 Bit, dann ist für den Speicher 12 eine Speicherkapazität von 1 Mbyte erforderlich.

Mittels der Video-Kontrolleinheit können die Bildwerte aus dem Speicher 11 ausgelesen und über einen Digital-Analog-Wandler 13 einer nicht näher dargestellten Wiedergabeeinheit 14 zugeführt werden.

Unter anderem durch den gewölbten Eingangsbildschirm des Röntgenbildverstärkers 4 werden kissenförmige Verzerrungen hervorgerufen. Diese geometrischen Verzerrungen würden - ohne die Bildtransformation - bei einer Auswertung der digitalisierten Bilder zu systematischen Fehlern führen.

Fig. 2a zeigt das Eingangsbild, das sich ergibt, wenn mit der Anordnung nach Fig. 1 eine Röntgenaufnahme von einem Testgitter mit quadratischen Maschen angefertigt wird. Die kissenförmige Verzeichnung führt dazu, daß die Gitterpunkte nicht auf den Bildpunkten der Röntgenaufnahme abgebildet werden, auf denen sie bei einer verzerrungsfreien Aufnahme abgebildet würden. Infolgedessen werden die zugehörigen Bildwerte im Speicher 10 nicht unter den Adressen gespeichert, unter denen sie gespeichert würden, wenn die Röntgenbildverstärker-Fernsehkette keine Verzerrungen aufweisen würde. Der Zusammenhang zwischen den Koordinaten $x_i$, $y_i$ im verzerrten Eingangsbild (Fig. 2a) und den Koordinaten x,y im unverzerrten Ausgangsbild (Fig. 2b) bzw. den jeweils zugehörigen Adressen im Eingangsspeicher 10 und im Ausgangsspeicher 11 läßt sich durch die folgenden Transformationspolynome beschreiben

$$x_i = f_0 + f_1 y + f_2 x + f_3 y^2 + f_4 yx + f_5 x^2 + f_6 y^3 + f_7 y^2 x + f_8 yx^2 + f_9 x^3 \quad (a)$$
$$y_i = g_0 + g_1 y + g_2 x + g_3 y^2 + ... + g_9 x^3 \quad (b)$$

Die Parameter $f_0..f_9$, $g_0..g_9$ werden dann nach der Methode der kleinsten Fehlerquadrate bestimmt (vergl. z.B. Pratt WK. "Digital Image Processing" New York 1978, Seiten 429-432).

Die Berechnungen gemäß den Gleichungen a) und b) werden einmal für alle Bildpunkte des Ausgangsbildes bzw. für alle Adressen des Ausgangsbildspeichers durchgeführt, und die daraus resultierenden Adressen werden im Adressenspeicher 12 gespeichert. Alle folgenden Röntgenaufnahmen werden dadurch entzerrt, daß der Adressenraum des Ausgangsspeichers 11 und des Adressenspeichers 12 durchlaufen wird und der Bildwert für das Ausgangsbild jeweils an der im Adressenspeicher 12 enthaltenen Quelladresse dem Eingangsspeicher 10 entnommen wird.

Im folgenden wird der Assembler-Code eines hierzu erforderlichen für den Mikroprozessor Motorola 68020 vorgesehenen Programmes angegeben. Dabei wird davon ausgegangen, daß, wie in Fig. 3 dargestellt, die Speicher 10, 11 und 12 Teil einer Speicheranordnung sind, in der unter der (hexadezimalen) Adresse 0-3 FFF das Betriebssystem, ab der Adresse 4.000 das Bildverarbeitungsprogramm, ab der Adresse 100.000 das Eingangsbild, ab der Adresse 140.000 das Ausgangsbild und ab der Adresse 200.000 die Adressen gespeichert sind. Die Adressen im Speicherbereich 10, 11 bzw. 12 sind dabei mit (a2), (a3) bzw. (a4) bezeichnet. Das Programm lautet

```
movea.1 (a4) + ,a2    (1)
move.b (a2),(a3) +     (2)
   subq.1#1,d4    (3)
      bne.w loop    (4)
```

Beim Initialisieren wird in das Adressregister a3 die erste Adresse des Ausgangsbildspeichers 11 geladen und in das Register a4 die zugehörige Adresse im Adressenspeicher 12. Das Datenregister d4 dient als Schleifenzähler und wird zu Beginn mit der Anzahl der Verarbeitungsschritte (262.144) für eine 512x512 Bildmatrix) geladen.

Der erste Befehl kopiert den Inhalt des Speicherplatzes, auf den a4 zeigt (ein 32-bit-Wert) in das Register a2 und erhöht gleichzeitig die Adresse im Register a4 um 1. Der dadurch in das Register a2 übernommene Wert ist die Adresse, unter der der zu transferierende Bildwert im Eingangsbildspeicher 10 gespeichert ist. - Der zweite Befehl kopiert das Datenwort, auf das das Register a2 zeigt, auf denjenigen Speicherplatz im Ausgangsbild, dessen Adresse in dem Register a3 enthalten ist und erhöht das Adressenregister um 1. Damit die Bildtransformation für den ersten Bildpunkt des Ausgangsbildes durchgeführt. - Der dritte Befehl verringert den Inhalt des Registers d4 um 1. Mit dem vierten Befehl wird zum ersten Befehl zurückgesprungen, wenn der Inhalt des Datenregisters d4 von 0 verschieden ist.

Somit wird die Schleife mit den Befehlen 1 bis 4 so oft durchlaufen, wie Bildpunkte vorhanden sind. Am Ende sind die Bildwerte den Adressen im Ausgangsspeicher 10 in gleicher Weise zugeordnet, wie bei einem verzerrungsfrei arbeitenden bildgebenden System. Da dafür keine Berechnungen mehr erforderlich sind, kann die Transformation sehr schnell - in Bruchteilen einer Sekunde - durchgeführt werden.

Bei dem zuvor erläuterten Verfahren wird jedem Bildpunkt im Ausgangsbild bzw. jedem Speicherplatz des Ausgangsspeichers 11 ein Bildwert aus dem Eingangsspeicher 10 zugeordnet. Dabei kann es vorkommen, daß ein Bildwert aus dem Eingangsspeicher 10 mehreren Bildadressen im Ausgangsspeicher 11 zugeordnet wird. - Grundsätzlich ist es auch möglich, stattdessen die Adressen des Eingangsspeichers 10 linear zu durchlaufen und den aufgerufenen Bildwert jeweils unter einer im Adressenspeicher 12 gespeicherten Adresse im Ausgangsspeicher 11 einzuschreiben. Dabei könnte es aber auch vorkommen, daß einigen Speicherplätzen im Ausgangsbildspeicher 11 kein Bildwert zugeordnet wird. Das Ausgangsbild würde also Lücken aufweisen. daher wird das anhand der Befehle 1 bis 4 vorstehend erläuterte Verfahren bevorzugt.

Die erfindungsgemäße Anordnung eignet sich nicht nur zum Entzerren von Eingangsbildern mit kissenförmigen Verzerrungen. Bei Fernsehkameras wird in Zeilenrichtung geometrisch eine längere Strecke abgetastet als vertikal z.B. im Verhältnis 4 : 3. Es entsteht somit ein nicht-quadratisches Bildpunktraster. Das gleiche gilt auch für CCD-Bildsensoren. Dieses nicht-quadratische Bildpunktraster kann - unter Verzicht auf die Bildwerte an den Rändern des Eingangsbildes - in ein Bild mit quadratischem Bildpunkteraster transformiert werden kann, wenn die verbleibenden Bildpunkte einer Zeile im Verhältnis 4 : 3 expandiert werden bzw. die zugehörigen Bildwerte in die zu diesen Bildpunkten gehörenden Speicherplätze im Ausgangsspeicher übertragen werden. Im Grunde stellt auch diese Transformation eine Entzerrung - durch Expansion in Zeilenrichtung - dar.

Grundsätzlich kann die Erfindung aber auch für andere geometrische Bildtransformationen - beispielsweise die Rotation eines Bildes - benutzt werden. Dabei muß ebenfalls nur ein einziges Mal berechnet werden, unter welchen Adressen im Eingangsbild die Bildwerte gespeichert sind, die in die einzelnen Speicherplätze des Ausgangsbildes übernommen werden.

Obwohl die geometrische Bildtransformation - insbesondere die Entzerrung - von Röntgenaufnahmen ein bevorzugtes Anwendungsgebiet der vorliegenden Erfindung ist, können auch andere Bilder damit transformiert werden.

## Patentansprüche

1. Schaltungsanordnung zur geometrischen Bildtransformation für ein bildgebendes System, das eine Folge digitaler Bildwerte liefert, die in einer Speicheranordnung gespeichert sind, die einen ersten Speicher (10) zur Speicherung der vom bildgebenden System (4,5) erzeugten Bildwerte enthält,
dadurch gekennzeichnet, daß ein zweiter Speicher (11) vorgesehen ist, in dem die Bildwerte entsprechend der Bildtransformation gespeichert sind und daß ein dritter Speicher (12) mit der gleichen Zahl von Speicherplätzen vorgesehen ist wie der zweite Speicher, in dem die zuvor einmal ermittelte Zuordnung zwischen den Adressen des ersten und des zweiten Speichers gespeichert ist und daß ein Mikroprozessor (8) vorgesehen ist, der den Adressenraum des zweiten und des dritten Speichers (11,12) jeweils in einer vorgegebenen, linear ab- oder zunehmenden Adressenfolge durchläuft und in dem zweiten Speicher (11) unter der jeweils aufgerufenen Adresse den Bildwert speichert, der im ersten Speicher (10) unter einer Adresse gespeichert ist, die in dem dritten Speicher (12) unter der jeweils aufgerufenen Adresse gespeichert ist.

2. Verwendung einer Schaltungsanordnung nach Anspruch 1 zur Korrektur der von einer Röntgenbildverstärkerfernsehkette erzeugten Verzerrungen.

3. Verwendung einer Schaltungsanordnung nach einem der Ansprüche 1 oder 2 bei einem bildgebenden System mit nicht-quadratischem Bildpunktraster.

## Claims

1. A circuit arrangement for geometric image transformation for an image-forming system which supplies a series of digital image values which are stored in a memory arrangement which comprises a first memory (10) for storing the image values generated by the image-forming system (4,5), characterized in that a second memory (11) is provided in which the image values corresponding to the image transformation are stored, and in that a third memory (12) with the same number of memory locations as the second memory is provided, in which the association between the addresses of the first and second memory is stored, and that a microprocessor (8) is provided which traverses the address space of the second and the third memory (11, 12) each time in a predetermined, linearly ascending or descending address sequence and stores in the second memory (11), at the respective address called up, the image value which is stored in the first memory (10) at an address which is stored in the third memory (12) at the respective address called up.

2. The use of a circuit arrangement as claimed in Claim 1 for correcting the distortions produced by an X-ray image intensifier/television chain.

3. The use of a circuit arrangement as claimed in Claim 1 for an image-forming system with a non-square image point raster.

## Revendications

1. Montage de circuit de transformation géométrique d'image pour un système formateur d'images, qui délivre une séquence de valeurs image numériques, qui sont mémorisées dans un dispositif de mémorisation qui contient une première mémoire (10) pour mémoriser les valeurs image produites par le système formateur d'images (4, 5), caractérisé en ce qu'il est prévu une deuxième mémoire (11) dans laquelle les valeurs image correspondant à la transformation d'image sont mémorisées et en ce qu'il est prévu une troisième mémoire (12) avec le même nombre d'emplacements de mémoire que la deuxième mémoire, dans laquelle l'affectation déterminée une fois au préalable entre les adresses de la première et de la deuxième mémoires est mémorisée et en ce qu'il est prévu un microprocesseur (8) qui parcourt l'espace d'adresses de la deuxième et de la troisième mémoires (11, 12), respectivement, selon une séquence d'adresses prédéterminée décroissant ou croissant linéairement et mémorise dans la deuxième mémoire (11) sous l'adresse respectivement appelée la valeur image qui est mémorisée dans la première mémoire (10) sous une adresse qui est mémorisée dans la troisième mémoire (12) sous l'adresse respectivement appelée.

2. Utilisation d'un circuit selon la revendication 1, pour correction des déformations produites par une chaîne de télévision à amplificateur d'image radiographique.

3. Utilisation d'un circuit selon la revendication 1, dans un système formateur d'images avec un canevas de points d'image non carré.

Fig. 1

Fig. 2

Fig. 3